# EUROPEAN PATENT SPECIFICATION

(11) **EP 4 174 338 B1**
(45) Date of publication and mention of the grant of the patent: **13.08.2025**
(21) Application number: 22203790.5
(22) Date of filing: 26.10.2022
(51) Int. Cl.: F16D 55/28, F16D 65/00, F16D 65/092, F16D 65/097

(54) **BRAKE FOR VEHICLE AND VEHICLE**
BREMSE FÜR FAHRZEUG UND FAHRZEUG
FREIN POUR VÉHICULE ET VÉHICULE

(30) Priority: 27.10.2021 CN 202122597707 U
(43) Date of publication of application: 03.05.2023
(73) Proprietor: Nio Technology (Anhui) Co., Ltd, Hefei City, Anhui 230601 (CN)
(72) Inventor: WANG, Rui, Jiading Shanghai, 201804 (CN); MA, Yiming, Jiading Shanghai, 201804 (CN); SHI, Yongxiang, Jiading Shanghai, 201804 (CN)
(74) Representative: Vossius & Partner Patentanwälte Rechtsanwälte mbB

(56) References cited:
- WO-A1-02/12747
- CN-A- 107 850 153
- DE-A1- 102017 208 575
- JP-U- H0 738 771
- US-A1- 2015 107 086

## Description

### Technical Field

The invention relates to the technical field of vehicle accessories, and particularly provides a brake for a vehicle and a vehicle.

### Background Art

With the development of the vehicle industry, consumers have increasingly higher requirements for the safety performance of vehicles, and the performance of a brake as an important safety device is particularly important.

In a vehicle braking process, friction between a friction disc and a brake disc generates noise. Existing brakes for a vehicle usually reduce the noise by means of adjusting material of a brake pad shim, adjusting material of the friction disc, slotting or chamfering the friction disc and improving pressure distribution of the friction disc.

However, the problem exists that the existing brakes for a vehicle usually cannot overcome low-frequency stubborn noise generated by a caliper structure in the brake in a braking process by reducing the noise using the foregoing methods.

In an existing brake for a vehicle, return springs are usually arranged at middle positions of friction discs, so the friction discs may rotate with respect to the contacting edge between the return springs and the friction discs, resulting in eccentric wear and a relatively low reduction in drag torque.

It is known from a German patent publication DE 10 2017 208 575 A1 that a disc brake includes two brake calipers, wherein the two brake calipers are provided a first friction disc and a second friction disc respectively, and wherein the first and second discs are each provided with a suspended body. By the suspended body, the resonance of the disc brake can be adjusted. However, this disc brake can't solve the problem of eccentric wear and a relatively low reduction in drag torque. Further, the published document CN 107 850 153 A discloses a disk brake including a brake caliper which is provided with a restoring device so that the brake caliper can be returned after a displacement and release of the brakes caused by a braking action.

Accordingly, there is a need in the art for a new brake for a vehicle and a vehicle to solve the foregoing problem.

### Summary of the invention

To solve the foregoing problems in the prior art, the invention is set out in the appended set of claims.

It can be understood by those skilled in the art that, in the technical solutions of the invention, the brake comprises a first caliper body and a second caliper body, wherein the first caliper body and the second caliper body are provided with a first friction disc and a second friction disc respectively, a brake disc is arranged between the first friction disc and the second friction disc, and the first friction disc and the second friction disc are each further provided with at least one mass block.

Through the foregoing arrangement, in the brake for a vehicle according to the invention, the first friction disc and the second friction disc are each provided with at least one mass block, and natural frequencies of the first friction disc and the second friction disc each provided with the at least one mass block are adjusted by tuning properties such as mass, density and volume of the at least one mass block 3, so that there is a relatively large difference between the natural frequencies of the first friction disc and the second friction disc each provided with the mass blocks and a frequency of low-frequency noise, so as to quickly reduce low-frequency operating noise of the brake, thereby fundamentally eliminating braking noise, and then solving the problem that existing brakes for a vehicle usually cannot overcome low-frequency stubborn noise generated by a caliper structure in the brake in a braking process. In addition, the brake according to the disclosure further improves the comfort level of driving experience of a user, and solves the problem in the prior art that a development cycle is prolonged due to modification of a caliper structure and a mold during reduction of braking noise.

### Brief Description of the Drawings

A brake for a vehicle and a vehicle according to the invention are described below with reference to accompanying drawings. In the accompanying drawings:
FIG. 1 is a schematic diagram of a three-dimensional structure of a brake for a vehicle according to the invention;
FIG. 2 is a schematic diagram of a planar structure of a brake for a vehicle according to the invention and
FIG. 3 is a schematic structural diagram of assembly of mass blocks, a first friction disc and a second friction disc of a brake for a vehicle according to the invention.

### List of reference numerals:

1 - First caliper body; 11 - First friction disc;
2 - Second caliper body; 21 - Second friction disc;
3 - Mass block; 31 - First mass block; 32 - Second mass block; 33 - Third mass block; 34 - Fourth mass block;
4 - Active return device; 41 - Active return device body; 411 - Bridge-shaped structure; 42 - Return spring; 421 - Return beam; 422 - Resilient piece; 4221 - First bent portion; 4222 - Second bent portion; 4223 - Third bent portion; and 423 - Arc-shaped bend.

### Detailed Description of Embodiments

Preferred implementations of the invention are described below with reference to the accompanying drawings. It should be understood by those skilled in the art that these implementations are only for explaining the technical principles of the invention and are not intended to limit the scope of protection of the invention.

Those skilled in the art can make adjustments according to requirements so as to adapt to specific application scenarios. For example, although in the specification, a connection relationship between a first mass block and a second mass block and a first friction disc and a connection relationship between a third mass block and a fourth mass block and a second friction disc are described by taking separate riveting of the first mass block and the second mass block to the first friction disc and separate riveting of the third mass block and the fourth mass block to the second friction disc, the connection relationship between the first mass block and the second mass block and the first friction disc and the connection relationship between the third mass block and the fourth mass block and the second friction disc according to the invention are not limited thereto, provided that the connection relationships can meet assembly requirements that the first mass block and the second mass block are fixedly installed on the first friction disc and that the third mass block and the fourth mass block are fixedly installed on the second friction disc. For example, the first mass block and the second mass block are separately bolted to the first friction disc, and the third mass block and the fourth mass block are separately bolted to the second friction disc. For another example, the first mass block and the second mass block are separately welded to the first friction disc, and the third mass block and the fourth mass block are separately welded to the second friction disc.

It should be noted that, in the description of the invention, the terms "first," "second," "third" and "fourth" are merely used for description but cannot be understood as indicating or implying relative importance.

In addition, it should also be noted that, in the description of the invention, the term "connect" should be interpreted in a broad sense unless explicitly defined and limited otherwise. For example, a connection may be a fixed connection, a detachable connection, or an integral connection; or may be a direct connection, or an indirect connection through an intermediate medium. For those skilled in the art, the specific meanings of the foregoing terms in the invention can be interpreted according to a specific situation.

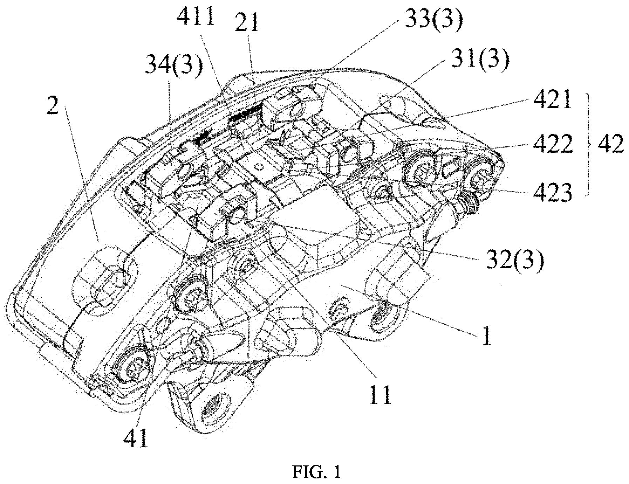

Referring to FIG. 1, a brake for a vehicle according to the invention is described first. FIG. 1 is a schematic diagram of a three-dimensional structure of a brake for a vehicle according to the invention.

As shown in FIG. 1, to solve the problem that existing brakes for a vehicle usually cannot overcome low-frequency stubborn noise generated by a caliper structure in the brake in a braking process, a brake for a vehicle according to the disclosure comprises a first caliper body 1 and a second caliper body 2, wherein the first caliper body 1 and the second caliper body 2 are provided with a first friction disc 11 and a second friction disc 21 respectively, a brake disc (not shown in the figure) is arranged between the first friction disc 11 and the second friction disc 21, and the first friction disc 11 and the second friction disc 21 are each further provided with at least one mass block 3.

Through the foregoing arrangement, in the brake for a vehicle according to the invention, the first friction disc 11 and the second friction disc 21 are each provided with the at least one mass block 3, and natural frequencies of the first friction disc 11 and the second friction disc 21 each provided with the at least one mass block 3 are adjusted by tunning properties such as mass, density and volume of the at least one mass block 3, so that there is a relatively large difference between the natural frequencies of the first friction disc 11 and the second friction disc 21 each provided with the at least one mass block 3 and a frequency of low-frequency noise, so as to quickly reduce low-frequency operating noise of the brake, thereby fundamentally eliminating braking noise, and then solving the problem that existing brakes for a vehicle usually cannot overcome low-frequency stubborn noise generated by a caliper structure in the brake in a braking process. In addition, the brake according to the disclosure further improves the comfort level of driving experience of a user, and solves the problem in the prior art that a development cycle is prolonged due to modification of a caliper structure and a mold during reduction of braking noise.

Further referring to FIGS. 1 to 3, a brake for a vehicle according to the invention is described in detail below.

As shown in FIG. 1, in a possible implementation, a natural frequency corresponding to the at least one mass block 3 matches a frequency of noise generated by the first friction disc 11, the second friction disc 21 and the brake disc in a braking process.

In this embodiment, to maximize the reduction of braking noise by arranging the at least one mass block 3 on the first friction disc 11 and the second friction disc 21, the frequencies of the at least one mass block 3 arranged on the first friction disc 11 and the second friction disc 21 need to match the frequency of noise generated by the first friction disc 11, the second friction disc 21 and the brake disc in the braking process. In other words, the at least one mass block 3 needs to have an appropriate mass determined based on the frequency of noise generated by the first friction disc 11, the second friction disc 21 and the brake disc in the braking process. By changing the mass of the at least one mass block 3, there is a relatively large difference between the natural frequencies of the first friction disc 11 and the second friction disc 21 each provided with the at least one mass block 3 and the frequency of low-frequency noise.

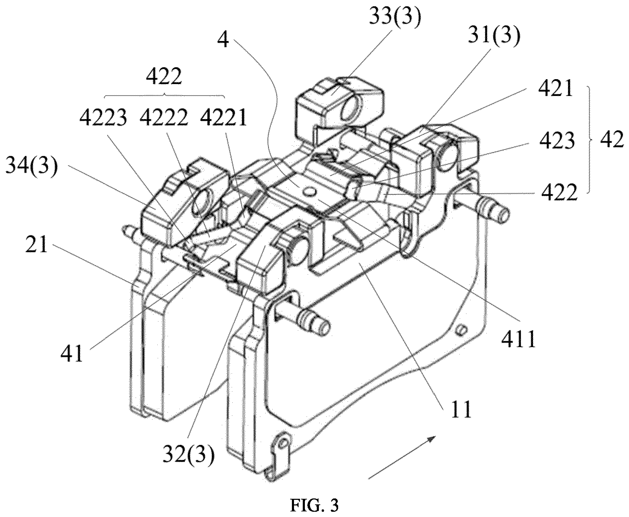

As shown in FIGS. 1 and 3, in this embodiment, to improve the reduction of the noise in the braking process by installing the at least one mass block 3 on the first friction disc 11 and the second friction disc 21, the first friction disc 11 is provided with a first mass block 31 and a second mass block 32, the second friction disc 21 is provided with a third mass block 33 and a fourth mass block 34, the first mass block 31 and the second mass block 32 are respectively arranged at two ends of the first friction disc 11 in a first direction, and the third mass block 33 and the fourth mass block 34 are respectively arranged at two ends of the second friction disc 21 in the first direction.

Since natural frequency of an object is closely related to mass and mass distribution of the object, in this embodiment, the first mass block 31 and the second mass block 32 are arranged at two ends of the first friction disc 11, while the third mass block 33 and the fourth mass block 34 are arranged at two ends of the second friction disc 21, so that the first mass block 31 and the second mass block 32 are arranged symmetrically with the third mass block 33 and the fourth mass block 34 along a plane of connection between the first caliper body 1 and the second caliper body 2 respectively. Thus, it can be easier to adjust the mass of the at least one mass block 3 in the process of adjusting the mass of the at least one mass block 3 to adjust the natural frequencies of the first friction disc 11 and the second friction disc 21 each provided with the mass blocks 3.

It should be noted that, in this embodiment, the first direction is a direction parallel to the bottom of the first friction disc 11 and parallel to a contact surface between the first friction disc 11 and the first caliper body 1, and is a direction shown by the arrow in FIG. 3.

As shown in FIG. 3, in a possible implementation, the first mass block 31 and the second mass block 32 are separately riveted to the first friction disc 11, and the third mass block 33 and the fourth mass block 34 are separately riveted to the second friction disc 21, to meet a requirement that the first mass block 31 and the second mass block 32 are separately fixedly connected to the first friction disc 11, and a requirement that the third mass block 33 and the fourth mass block 34 are separately fixedly connected to the second friction disc 21.

It can be understood that, although in this embodiment, a connection relationship between the first mass block 31 and the second mass block 32 and the first friction disc 11 and a connection relationship between the third mass block 33 and the fourth mass block 34 and the second friction disc 21 are described by taking separate riveting of the first mass block 31 and the second mass block 32 to the first friction disc 11 and separate riveting of the third mass block 33 and the fourth mass block 34 to the second friction disc 21 as examples, the connection relationship between the first mass block 31 and the second mass block 32 and the first friction disc 11 and the connection relationship between the third mass block 33 and the fourth mass block 34 and the second friction disc 21 in this embodiment are not limited thereto, provided that the connection relationships can meet assembly requirements that the first mass block 31 and the second mass block 32 are fixedly installed on the first friction disc 11 and that the third mass block 33 and the fourth mass block 34 are fixedly installed on the second friction disc 21. For example, the first mass block 31 and the second mass block 32 are separately bolted to the first friction disc 11, and the third mass block 33 and the fourth mass block 34 are separately bolted to the second friction disc 21. For another example, the first mass block 31 and the second mass block 32 are separately welded to the first friction disc 11, and the third mass block 33 and the fourth mass block 34 are separately welded to the second friction disc 21.

As shown in FIGS. 1 and 3, in a possible implementation, the brake further comprises an active return device 4, wherein the active return device 4 comprises a fixedly-arranged active return device body 41 and two return springs 42 symmetrically attached on the active return device body 41, and two ends of each return spring 42 abut against the first friction disc 11 and the second friction disc 21 respectively.

Through the foregoing arrangement, in the brake for a vehicle according to the invention, the structure of the active return device 4 arranged in the brake comprises the active return device body 41 and the two return springs 42 symmetrically attached on the active return device body 41, so that the two return springs 42 are symmetrically arranged between the first friction disc 11 and the second friction disc 21, so as to solve the problem that in an existing brake for a vehicle, return springs are usually arranged at middle positions of friction discs, so the friction discs may rotate with respect to the contacting edge between the return springs and the friction discs, resulting in eccentric wear and a relatively low reduction in drag torque.

As shown in FIGS. 1 and 3, for the active return device 4 to keep providing return spring force at the same level to the first friction disc 11 and the second friction disc 21 at any point during the service life of the first friction disc 11, the second friction disc 21 and the brake disc, in this embodiment, each of the return springs 42 comprises a return beam 421 and two resilient pieces 422 symmetrically arranged on two sides of the return beam 421, and the return beam 421 is fixedly connected to the active return device body 41.

In this embodiment, the two resilient pieces 422 are symmetrically arranged on the two sides of the return beam 421, so that in the braking process, the resilient piece 422 arranged on the either side of the return beam 421 is subjected to the same compressive force from the first friction disc 11 or the second friction disc 21. Therefore, elastic deformation of the resilient piece 422 arranged on the either side of the return beam 421 is the same, so that the active return device 4 can provide return spring force at the same level to the first friction disc 11 and the second friction disc 21 at any point during the service life of the first friction disc 11, the second friction disc 21 and the brake disc, thus a gap generated between the brake disc and the first friction disc 11 and a gap generated between the brake disc and the second friction disc 21 are also roughly the same, thereby reducing the drag torque in the braking process, improving mileage range of the vehicle, and prolonging lifespans of the brake disc, the first friction disc 11 and the second friction disc 21.

As shown in FIG. 3, to further improve the return effect of the active return device 4 and maintain a same feeling on a brake pedal for a user during the service life of the brake, in this embodiment, each of the two resilient pieces 422 comprises a first bent portion 4221, a second bent portion 4222 and a third bent portion 4223 which are connected in sequence, the first bent portion 4221 is connected to the return beam 421, and the third bent portion 4223 abuts against the first friction disc 11 or the second friction disc 21.

Through the foregoing arrangement, each resilient piece 422 abuts against the first friction disc 11 or the second friction disc 21 through the third bent portion 4223. This reduces a contact area between the return spring 42 and the first friction disc 11 or the second friction disc 21, so as to improve the return effect of the active return device 4.

Through the foregoing arrangement, in the braking process, the two resilient pieces 422 arranged on the two sides of the return beam 421 are compressed by the first friction disc 11 and the second friction disc 21 respectively, and with repeated braking, the two resilient pieces 422 arranged on the two sides of the return beam 421 are elastically deformed, so that after the braking is stopped, resilience force applied by each resilient piece 422 to the first friction disc 11 or the second friction disc 21 gradually decreases with the number of times of repeated braking, and thus the gap between the brake disc and the first friction disc 11 after being bounced back by the resilience force and the gap between the brake disc and the second friction disc 21 after being bounced back by the resilience force gradually become smaller. In addition, with repeated braking, the first friction disc 11 and the second friction disc 21 are constantly worn, and thus thicknesses of the first friction disc 11 and the second friction disc 21 are also reduced accordingly. Assuming that the same resilience force is always applied to the first friction disc 11 and the second friction disc 21 during the service life of the active return device 4, positions of the first friction disc 11 and the second friction disc 21 after being bounced back by the resilience force will always remain unchanged, so that with the constant wear of the first friction disc 11 and the second friction disc 21 in the repeated braking process (that is, the thicknesses of the first friction disc 11 and the second friction disc 21 gradually decrease), the gap between the brake disc and the first friction disc 11 after being returned to its inoperative position and the gap between the brake disc and the second friction disc 21 after being returned to its inoperative position gradually become larger. Therefore, as the two resilient pieces 422 arranged on the two sides of the return beam 421 are elastically deformed with repeated braking, the gap between the brake disc and the first friction disc 11 and the gap between the brake disc and the second friction disc 21 gradually become smaller, which counteracts a situation in which the gap between the brake disc and the first friction disc 11 and the gap between the brake disc and the second friction disc 21 after being returned to their respective inoperative positions gradually become larger with the constant wear of the first friction disc 11 and the second friction disc 21 in the repeated braking process. Therefore, the gap between the brake disc and the first friction disc 11 and the gap between the brake disc and the second friction disc 21 after being respectively bounced back by the resilience force are kept consistent during the service life of the active return device 4. This avoids a slow braking response caused when the gap between the brake disc and the first friction disc 11 and the gap between the brake disc and the second friction disc 21 become increasingly larger with the constant wear of the first friction disc 11 and the second friction disc 21 during repeated braking.

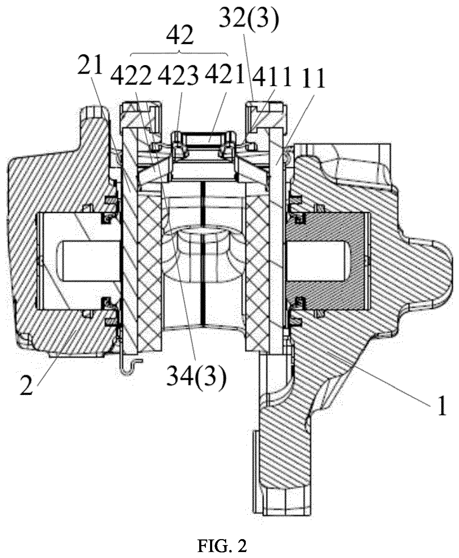

As shown in FIGS. 2 and 3, to further improve the return effect of the active return device 4 on the first friction disc 11 and the second friction disc 21, in this embodiment, an arc-shaped bend 423 is further arranged between the return beam 421 and each resilient piece 422.

In this embodiment, the arc-shaped bend 423 is arranged between the return beam 421 and each resilient piece 422, so that after the braking is stopped, the arc-shaped bend 423 can provide greater resilience force to the first friction disc 11 and the second friction disc 21, so as to improve the resilience effect of the active return device 4 on the first friction disc 11 and the second friction disc 21.

As shown in FIGS. 1 and 3, in this embodiment, to further improve the universal applicability of the active return device 4 in this embodiment, the return spring 42 is detachably connected to the active return device body 41, so that the universal applicability of the active return device 4 in this embodiment can be improved by independently designing the return spring 42 to match brake discs with different thicknesses.

In addition, as shown in FIGS. 1 and 3, to prevent the first friction disc 11 and the second friction disc 21 from jumping upwards in the braking and returning process, in this embodiment, the active return device body 41 is further provided with a bridge-shaped structure 411, and the bridge-shaped structure 411 is fixedly connected to the active return device body 41.

Through the foregoing arrangement, the bridge-shaped structure 411 arranged on the active return device body 41 can better limit the first friction disc 11 and the second friction disc 21, so as to prevent the first friction disc 11 and the second friction disc 21 from jumping upwards in the braking and returning process.

In conclusion, in the brake for a vehicle according to the invention, the first friction disc 11 and the second friction disc 21 are each provided with the at least one mass block 3, and natural frequencies of the first friction disc 11 and the second friction disc 21 each provided with the at least one mass block 3 are adjusted by tuning properties such as mass, density and volume of the at least one mass block 3, so that there is a relatively large difference between the natural frequencies of the first friction disc 11 and the second friction disc 21 each provided with the at least one mass block 3 and a frequency of low-frequency noise, so as to quickly reduce low-frequency operating noise of the brake, thereby fundamentally eliminating braking noise, and then solving the problem that existing brakes for a vehicle usually cannot overcome low-frequency stubborn noise generated by a caliper structure in the brake in a braking process. In addition, the brake according to the invention further improves the comfort level of driving experience of a user, and solves the problem in the prior art that a development cycle is prolonged due to modification of a caliper structure and a mold during reduction of braking noise.

## Claims

1. A brake for a vehicle, comprising a first caliper body (1) and a second caliper body (2), wherein the first caliper body (1) and the second caliper body (2) are provided with a first friction disc (11) and a second friction disc (21) respectively, a brake disc is arranged between the first friction disc (11) and the second friction disc (21), and the first friction disc (11) and the second friction disc (21) are each further provided with at least one mass block (3),
wherein the brake further comprises an active return device (4), wherein the active return device (4) comprises a fixedly-arranged active return device body (41) and two return springs (42) symmetrically attached on the active return device body (41), and two ends of each of the two return springs (42) abut against the first friction disc (11) and the second friction disc (21) respectively;
wherein the two return springs (42) each comprise a return beam (421) and two resilient pieces (422) symmetrically arranged on two sides of the return beam (421), and the return beam (421) is fixedly connected to the active return device body (41);
wherein the two resilient pieces (422) each comprise a first bent portion (4221), a second bent portion (4222) and a third bent portion (4223) which are connected in sequence, the first bent portion (4221) is connected to the return beam (421), and the third bent portion (4223) abuts against the first friction disc (11) or the second friction disc (21); and
wherein an arc-shaped bend (423) is further arranged between the return beam (421) and each resilient piece (422); and that the return spring (42) is detachably connected to the active return device body (41),
**characterized in that** the active return device body (41) is further provided with a bridge-shaped structure (411) for preventing the first friction disc (11) and the second friction disc (21) from jumping upwards in a braking and returning process, and the bridge-shaped structure (411) is fixedly connected to the active return device body (41).

2. The brake for a vehicle according to claim 1, wherein a natural frequency corresponding to the at least one mass block (3) matches a frequency of noise generated by the first friction disc (11), the second friction disc (21) and the brake disc in a braking process.

3. The brake for a vehicle according to claim 1, wherein the first friction disc (11) is provided with a first mass block (31) and a second mass block (32), the second friction disc (21) is provided with a third mass block (33) and a fourth mass block (34), the first mass block (31) and the second mass block (32) are respectively arranged at two ends of the first friction disc (11) in a first direction, and the third mass block (33) and the fourth mass block (34) are respectively arranged at two ends of the second friction disc (21) in the first direction.

4. The brake for a vehicle according to claim 3, wherein the first mass block (31) and the second mass block (32) are separately riveted or bolted or welded to the first friction disc (11), and the third mass block (33) and the fourth mass block (34) are separately riveted or bolted or welded to the second friction disc (21).

5. A vehicle, comprising a brake for the vehicle according to any one of claims 1 to 4.

## Patentansprüche

1. Bremse für ein Fahrzeug, umfassend einen ersten Sattelkörper (1) und einen zweiten Sattelkörper (2), wobei der erste Sattelkörper (1) und der zweite Sattelkörper (2) mit einer ersten Reibscheibe (11) bzw. einer zweiten Reibscheibe (21) versehen sind, wobei eine Bremsscheibe zwischen der ersten Reibscheibe (11) und der zweiten Reibscheibe (21) angeordnet ist und die erste Reibscheibe (11) und die zweite Reibscheibe (21) jeweils ferner mit mindestens einem Masseblock (3) versehen sind,
wobei die Bremse ferner eine aktive Rückstellvorrichtung (4) umfasst, wobei die aktive Rückstellvorrichtung (4) einen fest angeordneten aktiven Rückstellvorrichtungskörper (41) und zwei Rückstellfedern (42), die symmetrisch an dem aktiven Rückstellvorrichtungskörper (41) befestigt sind, umfasst und wobei zwei Enden jeder der zwei Rückstellfedern (42) an der ersten Reibscheibe (11) bzw. der zweiten Reibscheibe (21) anliegen;
wobei die zwei Rückstellfedern (42) jeweils einen Rückstellbalken (421) und zwei elastische Teile (422), die symmetrisch an zwei Seiten des Rückstellbalkens (421) angeordnet sind, umfasst und der Rückstellbalken (421) mit dem aktiven Rückstellvorrichtungskörper (41) fest verbunden ist;
wobei die zwei elastischen Teile (422) jeweils einen ersten gekrümmten Abschnitt (4221), einen zweiten gekrümmten Abschnitt (4222) und einen dritten gekrümmten Abschnitt (4223), die in Reihe miteinander verbunden sind, umfassen, wobei der erste gekrümmte Abschnitt (4221) mit dem Rückstellbalken(421) verbunden ist und der dritte gekrümmte Abschnitt (4223) an der ersten Reibscheibe (11) oder der zweiten Reibscheibe (21) anliegt und
wobei eine bogenförmige Krümmung (423) ferner zwischen dem Rückstellbalken (421) und jedem elastischen Teil (422) angeordnet ist; und wobei die Rückstellfeder (42) lösbar mit dem aktiven Rückstellvorrichtungskörper (41) verbunden ist,
**dadurch gekennzeichnet, dass** der aktive Rückstellvorrichtungskörper (41) ferner mit einer brückenförmigen Struktur (411) versehen ist, um zu verhindern, dass die erste Reibscheibe (11) und die zweite Reibscheibe (21) bei einem Brems- und Rückstellvorgang nach oben springen, und wobei die brückenförmige Struktur (411) mit dem aktiven Rückstellvorrichtungskörper (41) fest verbunden ist.

2. Bremse für ein Fahrzeug nach Anspruch 1, wobei eine zu dem mindestens einen Masseblock (3) gehörende Eigenfrequenz einer von der ersten Reibscheibe (11), der zweiten Reibscheibe (21) und der Bremsscheibe während eines Bremsvorgangs erzeugten Geräuschfrequenz entspricht.

3. Bremse für ein Fahrzeug nach Anspruch 1, wobei die erste Reibscheibe (11) mit einem ersten Masseblock (31) und einem zweiten Masseblock (32) versehen ist, wobei die zweite Reibscheibe (21) mit einem dritten Masseblock (33) und einem vierten Masseblock (34) versehen ist, wobei der erste Masseblock (31) und der zweite Masseblock (32) jeweils an zwei Enden der ersten Reibscheibe (11) in eine erste Richtung angeordnet sind und der dritte Masseblock (33) und der vierte Masseblock (34) jeweils an zwei Enden der zweiten Reibscheibe (21) in die erste Richtung angeordnet sind.

4. Bremse für ein Fahrzeug nach Anspruch 3, wobei der erste Masseblock (31) und der zweite Masseblock (32) separat mit der ersten Reibscheibe (11) vernietet oder verschraubt oder verschweißt sind und der dritte Masseblock (33) und der vierte Masseblock (34) separat mit der zweiten Reibscheibe (21) vernietet oder verschraubt oder verschweißt sind.

5. Fahrzeug, umfassend eine Bremse für das Fahrzeug nach einem der Ansprüche 1 bis 4.

## Revendications

1. Frein pour un véhicule, comprenant un premier corps d'étrier (1) et un second corps d'étrier (2), dans lequel le premier corps d'étrier (1) et le second corps d'étrier (2) sont pourvus d'une première plaquette de frottement (11) et d'une seconde plaquette de frottement (21) respectivement, un disque de frein est agencé entre la première plaquette de frottement (11) et la seconde plaquette de frottement (21), et la première plaquette de frottement (11) et la seconde plaquette de frottement (21) sont en outre chacune pourvues d'au moins un bloc de masse (3),
dans lequel le frein comprend en outre un dispositif de rappel actif (4), dans lequel le dispositif de rappel actif (4) comprend un corps de dispositif de rappel actif (41) agencé de façon fixe et deux ressorts de rappel (42) symétriquement attachés sur le corps de dispositif de rappel actif (41), et deux extrémités de chacun des deux ressorts de rappel (42) viennent en butée contre la première plaquette de frottement (11) et la seconde plaquette de frottement (21) respectivement ;
dans lequel les deux ressorts de rappel (42) comprennent chacun une barre de rappel (421) et deux pièces résilientes (422) symétriquement agencées sur deux côtés de la barre de rappel (421), et la barre de rappel (421) est reliée de façon fixe au corps de dispositif de rappel actif (41) ;
dans lequel les deux pièces résilientes (422) comprennent chacune une première partie cambrée (4221), une deuxième partie cambrée (4222) et une troisième partie cambrée (4223) qui sont reliées en séquence, la première partie cambrée (4221) est reliée à la barre de rappel (421), et la troisième partie cambrée (4223) vient en butée contre la première plaquette de frottement (11) ou la seconde plaquette de frottement (21) ; et
dans lequel une cambrure en forme d'arc (423) est en outre agencée entre la barre de rappel (421) et chaque pièce résiliente (422) ; et le ressort de rappel (42) est relié de façon détachable au corps de dispositif de rappel actif (41),
**caractérisé en ce que** le corps de dispositif de rappel actif (41) est en outre pourvu d'une structure en forme de pont (411) pour empêcher la première plaquette de frottement (11) et la seconde plaquette de frottement (21) de bondir vers le haut dans un processus de freinage et de rappel, et la structure en forme de pont (411) est reliée de façon fixe au corps de dispositif de rappel actif (41).

2. Frein pour un véhicule selon la revendication 1, dans lequel une fréquence naturelle correspondant à l'au moins un bloc de masse (3) est assortie à une fréquence de bruit générée par la première plaquette de frottement (11), la seconde plaquette de frottement (21), et le disque de frein dans un processus de freinage.

3. Frein pour un véhicule selon la revendication 1, dans lequel la première plaquette de frottement (11) est pourvue d'un premier bloc de masse (31) et d'un deuxième bloc de masse (32), la seconde plaquette de frottement (21) est pourvue d'un troisième bloc de masse (33) et d'un quatrième bloc de masse (34), le premier bloc de masse (31) et le deuxième bloc de masse (32) sont respectivement agencés à deux extrémités de la première plaquette de frottement (11) dans une première direction, et le troisième bloc de masse (33) et le quatrième bloc de masse (34) sont respectivement agencés à deux extrémités de la seconde plaquette de frottement (21) dans la première direction.

4. Frein pour un véhicule selon la revendication 3, dans lequel le premier bloc de masse (31) et le deuxième bloc de masse (32) sont séparément rivetés ou boulonnés ou soudés à la première plaquette de frottement (11), et le troisième bloc de masse (33) et le quatrième bloc de masse (34) sont séparément rivetés ou boulonnés ou soudés à la seconde plaquette de frottement (21).

5. Véhicule, comprenant un frein pour le véhicule selon l'une quelconque des revendications 1 à 4.
